# EUROPEAN PATENT SPECIFICATION

(11) **EP 2 799 227 B1**
(45) Date of publication and mention of the grant of the patent: **06.03.2019**
(21) Application number: 12861755.2
(22) Date of filing: 07.12.2012
(51) Int. Cl.: B32B 15/09, B65D 8/16, B65D 65/40, B32B 7/00, B32B 15/00, B32B 15/04, B32B 15/08, B32B 27/00, B32B 27/06, B32B 27/36, B32B 1/00, B32B 1/02

(54) **LAMINATED METAL SHEET AND FOOD CAN CONTAINER**
LAMINIERTE METALLSCHICHT UND DOSENBEHÄLTER FÜR LEBENSMITTEL
FEUILLE STRATIFIÉE ET BOÎTE DE CONSERVE POUR ALIMENTS

(30) Priority: 26.12.2011 JP 2011283703
(43) Date of publication of application: 05.11.2014
(73) Proprietor: JFE Steel Corporation, Tokyo 100-0011 (JP)
(72) Inventor: NAKAGAWA, Yusuke, Tokyo 100-0011 (JP); KITAGAWA, Junichi, Tokyo 100-0011 (JP); YAMANAKA, Yoichiro, Tokyo 100-0011 (JP); TOBIYAMA, Yoichi, Tokyo 100-0011 (JP)
(74) Representative: Hoffmann Eitle
(86) International application number: PCT/JP2012/081823
(87) International publication number: WO 2013/099563

(56) References cited:
- EP-A1- 1 690 675
- EP-A1- 2 241 437
- EP-A2- 0 798 110
- WO-A1-2010/116952
- JP-A- H06 155 660
- JP-A- 2003 225 969
- JP-A- 2005 161 621
- JP-A- 2005 238 718
- JP-A- 2005 254 630
- JP-A- 2010 105 263
- JP-A- 2010 158 821

## Description

### Field

The present invention relates to a laminated metal sheet suitably used for can bodies and can lids of food can containers.

### Background

Metal cans, which are a form of food package containers, are excellent in mechanical strength and long-term storage stability, and are safe and sanitary as package containers because hot contents can be directly charged and sealed therein, and a sterilization process such as retort processing can be performed easily after sealing. Metal cans are advantageous in that their separation and recovery from wastes is easy. Conventionally, metal cans have been produced from painted metal sheets. The painting process performed by can manufacturers, however, is complicated and has low productivity. The use of solvent-based paints produces environmental problems such as discharge of the solvent because a large amount of the solvent volatilizes during the drying and baking process following the painting. Moreover, it has been pointed out that in a case where a bisphenol A epoxy resin is used as a paint, the unreacted bisphenol A (BPA) remaining in the epoxy resin causes endocrine disruption although it is still weak. There is a growing movement to regulate bisphenol A (BPA) remaining in paint coatings in particular in food containers.

In view of such circumstances, laminated metal sheets heat-sealed with thermoplastic resin films not including BPA are being used as metal can materials. In particular, laminated metal sheets heat-sealed with polyester resin films are widely used because of their excellent performance in terms of food sanitation. Specifically, Patent Literatures 1 and 2 describe a technique in which a laminate of a biaxially oriented polyethylene terephthalate resin film on a metal sheet with a low-melting point polyester resin bonding layer interposed therebetween is used as a metal can material. Patent Literatures 3 and 4 describe a technique of producing a laminated metal sheet and a metal can with a high drawing ratio using a heat-sealable polyester resin film.

EP 1 690 675 A1 discloses a laminated metal sheet for can end, which is formed by laminating polyester film on both sides thereof, thus providing excellent appearance after retorting. The polyester film laminated to a side to become outer face of the formed can end has (1) half-time of crystallization of the resin of amorphous polyester layer formed near the interface between the polyester film and the metal sheet of 40 seconds or smaller at 130°C, (2) thickness of the amorphous polyester layer from 0.5 to 8 *µ*m, (3) water vapor transmissivity of the polyester film of 100 g/m 2 /24 hr or smaller. The amorphous polyester layer resin is preferably a polyester composition prepared by formulating a polyester (I) (30 to 60% by weight) composed mainly of ethylene terephthalate as the main repeating unit, and a polyester (II) (40 to 70% by weight) composed mainly of butylene terephthalate as the main repeating unit.

EP 2 241 437 A discloses a laminated metal sheet used for making a highly processed two-piece can body which endures harsh conditions such as retort treatment, and a two-piece can body made of the laminated steel sheet. A laminated metal sheet for a two-piece can body, including a metal sheet having a polyester resin film layer on each side of the metal sheet, the polyester resin film layer to be the outside of the can body having a crystallization temperature of 60 to 100°C, and the surface of the polyester resin film layer having a center line surface roughness (Ra) of 0.2 to 1.8 *µ*m. The polyester resin film layer to be the outside of the can body is preferably composed of 40 to 100% by mass of a resin composed mainly of butylene terephthalate and 0 to 60% by mass of a resin composed mainly of ethylene terephthalate.

### Citation List

### Patent Literature

Patent Literature 1: Japanese Laid-open Patent Publication No. 56-10451
Patent Literature 2: Japanese Laid-open Patent Publication No. 01-192546
Patent Literature 3: Japanese Laid-open Patent Publication No. 05-156040
Patent Literature 4: Japanese Laid-open Patent Publication No. 07-195617
Patent Literature 5: Japanese Laid-open Patent Publication No. 05-331302

### Summary

### Technical Problem

In a case where a laminated metal sheet heat-sealed with a polyester resin film is used on the exterior of a food can container, that is, on the side in contact with hot steam during retort processing, when a high-temperature sterilization process such as retort processing is performed, a retort whitening phenomenon in which the polyester resin film changes color occurs and impairs the design characteristics. In a case where the laminated metal sheet heat-sealed with a polyester resin film is used on the exterior of a food can container, therefore, the laminated metal sheet is required to be resistant to retort whitening. Patent Literature 5 states that the retort whitening phenomenon can be suppressed by increasing the crystallization rate of polymer. However, the mechanism of the retort whitening phenomenon has not been completely clarified, and the problem of the retort whitening phenomenon has not been resolved fundamentally. On the other hand, in a case where a laminated metal sheet heat-sealed with a polyester resin film is used on the interior of a food can container, the laminated metal sheet is required to be resistant to shock. The laminated metal sheet is also required to be excellent in mechanical characteristics such as 180° bendability, lid formability, and drawing workability so as to enable not only light forming such as lids but also forming with a high working ratio such as drawing and drawing ironing.

According to studies by the inventors of the present invention, a laminated metal sheet having retort whitening resistance and shock resistance and being excellent in mechanical characteristics has not been provided. The provision of a laminated metal sheet having retort whitening resistance and shock resistance and being excellent in mechanical characteristics has been awaited.

The present invention is made in view of the above-noted problem and aims to provide a laminated metal sheet having retort whitening resistance and shock resistance and being excellent in mechanical characteristics, and a food can container produced with the laminated metal sheet.

### Solution to Problem

A laminated metal sheet according to the present invention includes: a metal sheet; a first polyester resin layer formed on a surface of the metal sheet to serve as an exterior of a container after being formed into the container; and a second polyester resin layer formed on another surface of the metal sheet to serve as an interior of the container after being formed into the container, wherein the first polyester resin layer contains not less than 30% by mass and not more than 60% by mass of copolymerized polyethylene terephthalate having a copolymerization component content of less than 6 mol%, and not less than 40% by mass and not more than 70% by mass of polybutylene terephthalate, the second polyester resin layer is copolymerized polyethylene terephthalate having a copolymerization component content of less than 14 mol%, and the first and the second polyester resin layers have a degree of residual orientation in a range of not less than 2% and not more than 50%, and have thicknesses after lamination of not less than 6 µm.

A food can container according to the present invention is produced with the laminated metal sheet according to the present invention.

### Advantageous Effects of Invention

The present invention provides a laminated metal sheet having retort whitening resistance and shock resistance and being excellent in mechanical characteristics, and a food can container produced with the laminated metal sheet for containers.

### Description of Embodiments

A laminated metal sheet as an embodiment of the present invention will be described below.

### [Overall Construction of Laminated Metal Sheet]

A laminated metal sheet as an embodiment of the present invention includes a metal sheet, an exterior polyester resin layer formed on a surface of the metal sheet to serve as the exterior of a container after being formed into the container, and an interior polyester resin layer formed on a surface of the metal sheet to serve as the interior of a container after being formed into the container.

### [Construction of Metal Sheet]

Steel sheets and aluminum sheets widely used as food can container materials can be used as the metal sheet. In particular, for example, Tin Free Steel (TFS) is preferable, which is a surface-treated steel sheet having a double-layer coating including a lower layer and an upper layer of a chromium metal and a chromium hydroxide, respectively. The deposition amount of the chromium metal is preferably in a range of 70 to 200 mg/m² and the deposition amount of the chromium hydroxide is preferably in a range of 10 to 30 mg/m² in view of workability and corrosion resistance, although the deposition amounts of the chromium metal and the chromium hydroxide of TFS are not limited thereto.

### [Retort Whitening Phenomenon]

When retort processing is performed on a food can container produced with a metal sheet coated with a general polyester resin film, a phenomenon in which the polyester resin film whitens is often observed. This is because minute voids formed inside the polyester resin film diffusely reflect external light. The voids are not formed during heat treatment under dry conditions or during retort processing in a state of an empty can that is not filled with contents. The observation of the interface between the whitened polyester resin film and the metal sheet shows that the voids are not formed throughout the thickness direction of the polyester resin film but mainly formed in the vicinity of the metal sheet surface. Based on this, it is assumed that the voids are formed through the following mechanism.

A food can container filled with contents is exposed to water vapor at high temperature and high pressure immediately after the start of retort processing. In doing so, part of water vapor passes through the polyester resin film and intrudes into the vicinity of the metal sheet surface. The food can container filled with contents has been cooled by the contents charged before the retort processing, so that the polyester resin film in the vicinity of the metal sheet surface has a temperature lower than the surrounding atmosphere. The water vapor is then cooled in the amorphous polyester resin film in the vicinity of the metal sheet and condenses into water, and the condensed water expands the polyester resin film to form water bubbles. The water bubbles vaporize with increasing temperature of the contents with the progress of the retort processing, and voids are formed after the water bubbles vaporize.

The polyester resin film in the vicinity of the metal sheet is cooled by the contents and is heat-sealed, thereby becoming an amorphous layer in which crystalline orientation is deformed. The mechanical strength of the polyester resin film in the vicinity of the metal sheet is therefore lower than a crystalline layer and is easily deformed, possibly resulting in the phenomenon described above. The retort whitening phenomenon therefore can be suppressed if the strength of the amorphous layer in the vicinity of the metal sheet can be increased. In the heat sealing process, however, the polyester resin film is sealed on the surface of the metal sheet having a temperature increased to a temperature equal to or higher than the glass transition point, and the resin layer in the vicinity of the metal sheet surface is melted, inevitably causing deformation of the oriented crystals. In the present invention, therefore, the fragile amorphous layer with low mechanical strength immediately after lamination is made into a hard robust layer after being formed into a can body or a lid of a food can container, thereby suppressing the retort whitening phenomenon.

An example of the process for crystalizing the polyester resin film as an amorphous layer before retort processing is heat treatment before retort processing. The heat treatment before forming into a container is not realistic because the polyester resin film having a high crystalline orientation is inferior in formability and can be used for only limited forms of containers. The heat treatment after forming into a container is also disadvantageous in that the number of processes after forming is increased and the production costs are increased. In an attempt to enhance the crystalline orientation using heat during retort processing, the inventors of the present invention have found a resin composition with a high thermal crystallization rate and used this resin composition in the exterior polyester resin layer. That is, in the present invention, the polyester resin as an amorphous layer is crystallized before voids are formed in the resin layer on the exterior of the can in the retort processing, whereby the strength of the amorphous layer is improved.

### [Exterior Polyester Resin Layer]

A specific composition for increasing the thermal crystallization rate of the exterior polyester resin layer is a polyester composition in which a polyester (A) and a polyester (B) are mixed, and the ratio of the polyester (A) of not more than 60% by mass and the ratio of the polyester (B) of not less than 40% by mass are effective. The ratio of the polyester (A) greater than 70% by mass and the ratio of the polyester (B) less than 30% by mass cannot suppress the formation of bubbles in the vicinity of the metal sheet surface during retort processing, so that the resin layer whitens and the design characteristics are significantly impaired.

The ratio of the polyester (A) less than 30% by mass and the ratio of the polyester (B) greater than 70% by mass can suppress the retort whitening phenomenon, but excessively reduce the elasticity of the resin layer and degrade mechanical characteristics. The resin layer is therefore easily damaged during transportation and during forming, and its use for food can containers is difficult. In addition, the resin cost is too high to be practical. Accordingly, in order to suppress the retort whitening phenomenon and to ensure workability of drawing and drawing ironing as well as resistance to damages in the resin layer on the side serving as the exterior after forming into a container, the ratio (A/B) in mass% between the polyester (A) and the polyester (B) is preferably in a range of 30 to 60/70 to 40, more preferably in a range of 40 to 50/60 to 50.

The polyester (A) is a product of a melt condensation reaction of a terephthalic acid component and an ethylene glycol component as main components. Polyethylene terephthalate is copolymerized with another component within a range not impairing the effect of the present invention. The copolymerization component may be either an acid component or an alcohol component. Examples of the copolymerization component include aromatic dicarboxylic acids such as isophthalic acid, phthalic acid, and naphthalenedicarboxylic acid; aliphatic dicarboxylic acids such as adipic acid, azelaic acid, sebacic acid, and decanedicarboxylic acid; and alicyclic dicarboxylic acids such as cyclohexanedicarboxylic acid. Among those, isophthalic acid is particularly preferable.

Examples of the copolymerization alcohol component include aliphatic diols such as butanediol and hexanediol; and alicyclic diols such as cyclohexanedimethanol. These can be used singly or in combination of two or more. The proportion of the copolymerization component is, although it depends on the kind, such that the resulting polymer melting point is in a range of 210 to 256°C, preferably 215 to 256°C, further preferably 220 to 256°C. The polymer melting point less than 210°C degrades heat resistance. The polymer melting point exceeding 256°C excessively increases the polymer crystallinity to impair the forming workability.

The polyester (B) is a product of a melt polycondensation reaction of a terephthalic acid component and a 1,4-butanediol component as main components and may be copolymerized with another component in a range not impairing the effect of the present invention. The copolymerization component may be either an acid component or an alcohol component. Examples of the copolymerization acid component include aliphatic dicarboxylic acids such as isophthalic acid, phthalic acid, and naphthalenedicarboxylic acid; aliphatic dicarboxylic acids such as adipic acid, azelaic acid, sebacic acid, and decanedicarboxylic acid; and aliphatic dicarboxylic acids such as cyclohexanedicarboxylic acid. Among those, isophthalic acid and 2,6-naphthalenedicarboxylic acid are preferable.

Examples of the copolymerization alcohol component include aliphatic diols such as ethylene glycol and hexanediol; and alicyclic diols such as cyclohexanedimethanol. These can be used singly or in combination of two or more. The proportion of the copolymerization component is, although it depends on the kind, such that the resulting polymer melting point is in a range of 180 to 223°C, preferably 200 to 223°C, further preferably 210 to 223°C. The polymer melting point less than 180°C reduces the crystallinity as polyester and results in poor heat resistance.

The mixing ratio between the polyester (A) and the polyester (B) is adjusted such that the polymer melting point is in a range of 200 to 256°C, preferably 210 to 256°C, further preferably 220 to 256°C. When being used for a food can container, the exterior polyester resin layer preferably has a thickness larger than 6 µm. With the thickness of 6 µm or less, if the exterior polyester resin layer is damaged due to rubbing or other causes during forming or during transportation of the food can container, the metal sheet surface may be exposed, thereby impairing the appearance, or corrosion may originate from the exposed metal sheet during long-term storage. The upper limit of the thickness of the exterior polyester resin layer is not limited but can be determined if necessary, because increasing the thickness more than necessary has no merit in performance and incurs a cost increase.

Since the exterior polyester resin layer as described above is used on the side serving as the exterior after being formed into a container, the exterior polyester resin layer may be possibly damaged, depending on forming with a high working ratio such as drawing and drawing ironing. Damage to the exterior polyester resin layer can be reduced by improving lubricity by adding an organic slip additive or other additives, if necessary, in a range not impairing the effect of the present invention.

### [Interior Polyester Resin Layer]

The interior polyester resin layer is a polymer of a dicarboxylic acid and a diol component. Examples of the dicarboxylic acid component include terephthalic acid, isophthalic acid, naphthalenedicarboxylic acid, and diphenyldicarboxylic acid. Among those, terephthalic acid and isophthalic acid can be preferably used. Examples of the diol component include ethylene glycol, propanediol, and butanediol. Among those, ethylene glycol is preferable.

These dicarboxylic acid components and diol components can be used in combination of two or more. The proportion of the copolymerization component is, although it depends on the kind, such that the resulting polymer melting point is in a range of 210 to 256°C, preferably 215 to 256°C, further preferably 220 to 256°C. The polymer melting point less than 210°C degrades heat resistance. The polymer melting point exceeding 256°C excessively increases the polymer crystallinity to impair the forming workability. Antioxidants, thermal stabilizers, ultraviolet absorbers, plasticizers, pigments, antistatic agents, crystal nucleating agents, or other agents can be blended if necessary.

The interior polyester resin layer as described above is excellent in mechanical characteristics such as tensile strength, elasticity, and impact strength and has polarity. This therefore can be used as a main component to improve the adhesiveness and formability of the internal polyester resin layer to such a level that can withstand container forming, and to impart shock resistance after container forming.

### [Degree of Residual Orientation]

The big feature of the polyethylene terephthalate-based laminate film is that the amount of oriented crystals largely affects the characteristics. Taking advantage of this feature, laminated metal sheets having desired basic performance can be individually fabricated by controlling the amount of oriented crystals into an adequate amount in accordance with the required performance. A specific method is as follows: a biaxially oriented crystalline film is used, and the amount of residual oriented crystals is controlled by precisely controlling the lamination conditions in the heat-sealing process.

This method is very convenient for industrial use and allows individual fabrication of various kinds of products in accordance with the required performance using the same raw materials. In general, reducing the degree of residual orientation improves formability, and increasing the degree of residual orientation enhances shock resistance. In the present invention, the degree of residual orientation of the biaxially oriented polyester resin layer is controlled in a range of 2 to 50% in accordance with the characteristics required for the applications such as lids and can bodies. The degree of residual orientation is a value obtained by X-ray diffraction analysis and is defined as follows.
(1) For an oriented polyester resin (or an oriented polyester film) before lamination and the resin (or film) after lamination, the X-ray diffraction intensity is measured in a range of 2θ = 20 to 30°.
(2) The straight line between X-ray diffraction intensities at 2θ = 20° and at 2θ = 30° is set as a base line.
(3) The height of the highest peak observed in the neighborhood of 2θ = 22 to 28° is measured with reference to the base line.
(4) The degree of residual orientation (%) is represented by P2/P1 × 100, where P1 is the height of the highest peak of the film before lamination, and P2 is the highest peak of the film after lamination.

The degree of residual orientation of the exterior polyester resin layer and the interior polyester resin layer is set to 2 to 50%. If the degree of residual orientation is greater than 50%, the adhesiveness is bad, and film separation and other problems occur after forming. The oriented crystals of the biaxially drawn polyester film are deformed by heat from the metal sheet during heat-sealing, so that the resin layer becomes amorphous polyester resin. If the amount of input heat in heat-sealing is small, the melting of the resin layer is insufficient at the interface with the metal sheet, and the adhesion force between the metal sheet and the resin layer is weak. It is therefore necessary to ensure the adhesion force of the resin layer required for the use in food can containers, and it is also necessary to ensure workability by reducing the degree of residual orientation to a certain degree or lower, thereby increasing the proportion of the highly deformable amorphous polyester resin layer laminated on a metal sheet.

Accordingly, the degree of residual orientation of the exterior polyester resin layer and the interior polyester resin layer is not more than 50%, more preferably in a region not more than 40%. In the applications with a high working ratio such as drawn cans and drawn and ironed cans, the degree of residual orientation has to be reduced more in accordance with the working ratio and is preferably in a region not more than 20%, more preferably not more than 10%, further preferably not more than 5%. On the other hand, if the proportion of the amorphous polyester layer is extremely high for the purpose of shock resistance on the interior and reduction of film damage during seaming, dents during transportation, seaming, and others cause film defects. The lower limit of the degree of residual orientation is therefore preferably 2%.

In order to balance the degree of residual orientation in accordance with the required characteristics in addition to the compositions of the exterior polyester resin layer and the interior polyester resin layer, it is preferable that the exterior polyester resin layer be polyethylene terephthalate or copolymerized polyethylene terephthalate preferably copolymerized with less than 6 mol% of isophthalic acid as an acid component as necessary, and that the interior polyester resin layer be copolymerized polyethylene terephthalate preferably copolymerized with less than 14 mol% of isophthalic acid as an acid component. The interior polyester resin layer is copolymerized in order to ensure adhesiveness and flavor resistance, because it is used on the can interior after being formed into a container.

The exterior polyester resin layer and the interior polyester resin layer serve as the exterior and the interior, respectively, after being formed into a container, and have to satisfy the required characteristics described above. The degree of residual orientation is determined so as to fulfill the required characteristics. If the proportion of the amorphous polyester greatly differs between the interior and the exterior when laminated, the required characteristics are not satisfied on one side or both sides. In such a case, the production is difficult with the degree of residual orientation of interest that satisfies the required characteristics on both sides at the same time. In other words, the compositions need to be adjusted such that the exterior polyester resin layer and the interior polyester resin layer do not significantly differ from each other in degree of residual orientation.

There is a close relation between the temperature of the metal sheet when laminated and the melting point of the resin, and the temperature of the metal sheet during lamination is determined by the resin melting point. The resin melting point depends on the resin composition. Polybutylene terephthalate has a melting point lower than that of polyethylene terephthalate, and the melting point largely varies with a blend ratio. Isophthalic acid-copolymerized polyethylene terephthalate has a melting point lower than that of polyethylene terephthalate. Accordingly, the resin melting point of the exterior polyester resin layer is sufficiently lower than that of the interior polyester resin layer, depending on the mixing ratio between the polyester (A) and the polyester (B), so that polyethylene terephthalate not copolymerized can be used as the exterior polyester resin layer.

In a case where it is necessary to vary the film thickness between the exterior polyester resin layer and the interior polyester resin layer in accordance with the contents and the forming process, it is possible to adjust the resin melting point by copolymerizing the polyester (A) with isophthalic acid in order to control the degree of residual orientation after lamination on both the interior and the exterior. In this case, the difference in degree of residual orientation between the interior and the exterior of the container is preferably in a range within 40%, more preferably within 30%. If the difference in degree of residual orientation between the interior and the exterior of the container is greater than 40%, the characteristics required for containers cannot be obtained sufficiently; for example, the adhesiveness of the resin layer with a higher degree of residual orientation is reduced.

Production of the exterior polyester resin layer and the interior polyester resin layer is not limited to a specific process. For example, polyester resins are dried as necessary and supplied singly and/or individually to a known melt lamination extruder to be extruded into a sheet from a slit-shaped die. The extrusion is brought into close contact with a casting drum, for example, by electrostatic application and solidified by cooling to obtain a non-drawn sheet. The non-drawn sheet is drawn in the longitudinal direction and the width direction of a film to obtain a biaxially drawn film. The drawing ratio can be set as desired in accordance with the degree of orientation, strength, elasticity, and other properties of the film of interest. However, a tenter process is preferable in terms of film quality. A sequential biaxial drawing process of drawing in the longitudinal direction followed by drawing in the width direction, and a simultaneous biaxial drawing process of drawing in the longitudinal direction and the width direction approximately simultaneously are preferable.

Production of the laminated metal sheet is not limited to a specific process. For example, the metal sheet is heated to a temperature exceeding the melting point of the film, and the resin films are brought into contact with and heat-sealed on both surfaces of the metal sheet using a pressure roll (hereinafter referred to as the laminating roll). The lamination conditions are set as appropriate so that the resin layers defined in the present invention can be obtained. For example, preferably, the temperature of the metal sheet during lamination is set at at least 160°C or more, and the contact time at a temperature equal to or higher than the melting point of the film is set in a range of 1 to 20 msec, as history of temperature experienced by the film during lamination.

In order to achieve the lamination conditions as described above, high-speed lamination as well as cooling during bonding is necessary. The pressure applied during lamination is preferably, but not limited to, 0.098 to 2.94 MPa (1 to 30 kgf/cm²) as a surface pressure. If the surface pressure is too low, sufficient adhesion cannot be obtained even though the temperature reached by the resin interface is equal to or higher than the melting point, because the time is too short. Application of a large pressure does not adversely affect the performance of the laminated metal sheet but is uneconomical because the force exerted on the laminating roll is so large as to require the facility strength, leading to size increase of the apparatus.

In the present invention, basically, the exterior polyester resin layer and the interior polyester resin layer are formed into films and heat-sealed on the heated metal sheet. However, as long as the specifications of the exterior polyester resin layer and the interior polyester resin layer are within the scope of the present invention, melt extrusion lamination can be applied, in which the exterior polyester resin layer and the interior polyester resin layer are melted and applied on the surfaces of the metal sheet, without forming the exterior polyester resin layer and the interior polyester resin layer into films.

### [Examples]

In Examples, a steel sheet with a thickness of 0.20 to 0.27 mm subjected to cold rolling, annealing, and temper rolling underwent degrease and acid wash followed by a chromium plating process to produce a chromium-plated steel sheet (TFS). In the chromium plating process, the chromium plating process was performed in a chromium plating bath containing CrO₃, F⁻, and SO₄²⁻, process rinsing was performed, and electrolysis was performed with a chemical treatment liquid including CrO₃ and F⁻. In doing so, the deposition amounts of the chromium metal and the chromium hydroxide were adjusted to 120 mg/m² and 15 mg/m², respectively, in terms of Cr, by adjusting the electrolysis conditions (for example, current density and electrical quantity).

Next, using a metal sheet coater, the chromium-plated steel sheet was heated and coated with resin films of Examples 1 to 12 of the present invention and Comparative Examples 1 to 10 listed in Table 1 below by heat-sealing with the laminating roll, so that the exterior polyester resin layer (the exterior resin layer) and the interior polyester resin layer (the interior resin layer) were formed on one surface and the other surface of the chromium-plated steel sheet, thereby producing a laminated metal sheet. The laminating roll was an internal water cooling system in which cooling water was forcedly circulated during coating to provide cooling during bonding of the films. The characteristics of the laminated metal sheet and the films on the laminated metal sheet were evaluated by the following methods. PET and PET/I in Table 1 show polyethylene terephthalate and copolymerized polyethylene terephthalate, respectively.

**Table 1**

| | TFS sheet thickness (mm) | Exterior resin layer | | | | | | Interior resin layer | | | |
|---|---|---|---|---|---|---|---|---|---|---|---|
| | | Polyester (A) | | Weight ratio between polyesters (A) and (B) | | Thickness (µm) | Degree of residual orientation (%) | Polyester (C) | | Thickness (µm) | Degree of residual orientation (%) |
| | | Main component | Copolymerization ratio (mol%) | (A) | (B) | | | Main component | Copolymerization ratio (mol%) | | |
| Example 1 | 0.27 | PET | 0 | 47 | 53 | 12 | 41 | PET/I | 12 | 16 | 41 |
| Example 2 | 0.27 | PET | 0 | 47 | 53 | 12 | 38 | PET/I | 12 | 16 | 28 |
| Example 3 | 0.27 | PET | 0 | 47 | 53 | 12 | 35 | PET/I | 12 | 16 | 14 |
| Example 4 | 0.27 | PET/I | 5 | 47 | 53 | 12 | 24 | PET/I | 12 | 16 | 41 |
| Example 5 | 0.27 | PET/I | 5 | 47 | 53 | 12 | 21 | PET/I | 12 | 16 | 28 |
| Example 6 | 0.27 | PET/I | 5 | 47 | 53 | 12 | 17 | PET/I | 12 | 16 | 14 |
| Example 7 | 0.27 | PET/I | 3 | 46 | 54 | 12 | 28 | PET/I | 12 | 16 | 41 |
| Example 8 | 0.27 | PET/I | 3 | 46 | 54 | 12 | 24 | PET/I | 12 | 16 | 28 |
| Example 9 | 0.27 | PET/I | 3 | 46 | 54 | 12 | 21 | PET/I | 12 | 16 | 14 |
| Example 10 | 0.27 | PET/I | 3 | 32 | 68 | 12 | 17 | PET/I | 12 | 16 | 41 |
| Example 11 | 0.27 | PET/I | 3 | 32 | 68 | 12 | 14 | PET/I | 12 | 16 | 28 |
| Example 12 | 0.27 | PET/I | 3 | 32 | 68 | 12 | 10 | PET/I | 12 | 16 | 14 |
| Comparative Example 1 | 0.20 | PET | 0 | 40 | 60 | 6 | 25 | PET/I | 12 | 16 | 10 |
| Comparative Example 2 | 0.20 | PET | 0 | 25 | 75 | 12 | 0 | PET/I | 12 | 16 | 30 |
| Comparative Example 3 | 0.20 | PET | 0 | 40 | 60 | 12 | 0 | PET | 0 | 12 | 65 |
| Comparative Example 4 | 0.20 | PET | 0 | 50 | 50 | 12 | 0 | PET | 0 | 12 | 65 |
| Comparative Example 5 | 0.20 | PET | 0 | 50 | 50 | 12 | 0 | PET/I | 15 | 16 | 0 |
| Comparative Example 6 | 0.27 | PET/I | 12 | 100 | 0 | 12 | 48 | PET/I | 12 | 16 | 48 |
| Comparative Example 7 | 0.20 | PET | 0 | 40 | 60 | 18 | 7 | PET/I | 12 | 28 | 0 |
| Comparative Example 8 | 0.20 | PET/I | 12 | 100 | 0 | 19 | 8 | PET/I | 12 | 28 | 8 |
| Comparative Example 9 | 0.20 | PET/I | 12 | 100 | 0 | 19 | 12 | PET/I | 12 | 28 | 12 |
| Comparative Example 10 | 0.20 | PET/I | 12 | 100 | 0 | 19 | 20 | PET/I | 12 | 28 | 20 |

### (1) Degree of Residual Orientation of Film

The degree of residual orientation was obtained by X-ray diffraction analysis by the method described above. The degree of residual orientation (%) is represented by P2/P1 × 100 where P1 is the height of the highest peak of the film before lamination and P2 is the highest peak of the film after lamination.

### (2) 180° Bendability

The resin-coated metal sheet was sheared into a width of 20 mm and a length of 120 mm, covered with a protective plate, and subjected to a 180°C bend test (0T bend) with a press, and the formability of the seamed portion was evaluated. Next, the metal sheet was placed in a retort sterilization furnace and subjected to retort processing at 125°C for 90 minutes. After the processing, with the bended portion as a negative electrode and the sample upper portion (the steel sheet exposed portion) as a positive electrode, a voltage of 6 V was applied between a platinum electrode and the sample. Three seconds after the voltage application, the current value was read, and the degree of damage of the film was evaluated based on the current value by the following criteria.
A: less than 0.01 mA
B: 0.01 mA or more, less than 0.1 mA
C: 0.1 mA or more

### (3) Lid Formability

After wax was applied on the resin-coated metal sheet, a disk having a diameter of 123 mm was punched to obtain a 202-diameter lid with a press with a 202-diameter die. A bead was formed on this lid. Focusing attention on the bead of the resulting lid, the degree of film damage was evaluated by the following criteria.
A: no damage to the film after lid making
B: lid making succeeded, but cracks appeared in the film
C: fracture occurred during lid making, and lid making failed

### (4) Drawn Can Formability

After wax was applied on the resin-coated metal sheet, a disk having a diameter of 179 mm was punched to obtain a shallow drawn can with a drawing ratio of 1.80. Next, redrawing was performed on the drawn can with drawing ratios of 2.20 and 2.90. A deep drawn can was formed by dome forming, followed by trimming and neck-in flange working. Focusing attention on the neck-in portion of the resulting deep drawn can, the degree of film damage was evaluated by the following criteria.
A: no damage to the film after forming
B: forming succeeded, but chipping and delamination occurred in the film
C: the can body was broken during forming, and forming failed

### (5) Retort Whitening Resistance

A lid and a drawn can were fabricated from the resin-coated metal sheet by such forming as in (3) and (4), and the drawn can was filled with water as the content and seamed with the lid produced in (3). The can was placed in a retort sterilization furnace with the bottom face down and subjected to retort processing at 125°C for 90 minutes. After the processing, the appearance changes of the can bottom and the lid outer surface were evaluated by the following criteria.
A: no change was observed in appearance
B: slight fogging occurred in appearance
C: appearance became whitish (whitening occurred)

### (6) Shock Resistance

The can that was able to be formed in (4) above was filled with tap water at room temperature and seamed with a lid for sealing. In each test, a set of ten cans were dropped from a height of 1.25 m onto a vinyl chloride tiled floor, and the lid and tap water in the can were thereafter removed. The film at a point of the upper portion of the can was shaved off to expose the steel sheet surface. The can was thereafter filled with 5% saline solution, into which a platinum electrode was dipped (the position of dipping was at the center of the can) to serve as a negative electrode, and the upper portion of the can (the steel sheet exposed portion) was set as a positive electrode. A voltage of 6 V was then applied between the platinum electrode and the can. Three seconds after the voltage application, the current value was read. The mean value of the measured values of the ten cans was obtained, and the shock resistance was evaluated based on the mean value by the following criteria.
A: less than 0.01 mA
B: 0.01 mA or more, less than 0.1 mA
C: 0.1 mA or more

The evaluation results are listed in Table 1 and Table 2 below. As listed in Table 2, the laminated metal sheets of Examples 1 to 12 of the present invention have both retort whitening resistance and shock resistance. In addition, as listed in Table 1 and Table 2, the laminated metal sheets of Examples 1 to 12 of the present invention enable deep draw forming, depending on a range of degree of residual orientation. By contrast, the laminated metal sheets of Comparative Examples 1 to 10 are significantly degraded in design characteristics after retort processing and cannot satisfy the characteristics required for food cans. Based on the foregoing, the laminated metal sheets of Examples 1 to 12 of the present invention demonstrate that a laminated metal sheet having retort whitening resistance and shock resistance and being excellent in mechanical characteristics can be provided.

**Table 2**

| | 180° bendability | Lid formability | Drawn can formability | Retort whitening resistance | Shock resistance |
|---|---|---|---|---|---|
| Example 1 | A | A | B | A | A |
| Example 2 | A | A | B | A | A |
| Example 3 | A | A | B | A | A |
| Example 4 | A | A | A | A | A |
| Example 5 | A | A | A | A | A |
| Example 6 | A | A | A | A | A |
| Example 7 | A | A | A | A | A |
| Example 8 | A | A | A | A | A |
| Example 9 | A | A | A | A | A |
| Example 10 | A | A | A | A | A |
| Example 11 | A | A | A | A | A |
| Example 12 | A | A | A | A | A |
| Comparative Example 1 | C | C | C | Not evaluated | Not evaluated |
| Comparative Example 2 | C | A | A | A | A |
| Comparative Example 3 | C | A | C | A | A |
| Comparative Example 4 | C | A | C | A | A |
| Comparative Example 5 | C | A | C | A | C |
| Comparative Example 6 | A | A | C | C | A |
| Comparative Example 7 | A | A | A | A | C |
| Comparative Example 8 | A | A | A | C | B |
| Comparative Example 9 | A | A | A | C | A |
| Comparative Example 10 | A | A | A | C | A |

Although an embodiment of the present invention made by the inventors has been described above, the present invention is not limited by the description and drawings of the present embodiment that are part of the disclosure of the present invention. In other words, all the other embodiments, examples, operating techniques, and the like made by those skilled in the art based on the present embodiment shall be embraced in the scope of the present invention.

## Claims

1. A laminated metal sheet comprising:
a metal sheet;
a first polyester resin layer formed on a surface of the metal sheet to serve as an exterior of a container after being formed into the container; and
a second polyester resin layer formed on another surface of the metal sheet to serve as an interior of the container after being formed into the container, wherein
the first polyester resin layer contains not less than 30% by mass and not more than 60% by mass of copolymerized polyethylene terephthalate having a copolymerization component content of less than 6 mol%, and not less than 40% by mass and not more than 70% by mass of polybutylene terephthalate,
the second polyester resin layer is a copolymerized polyethylene terephthalate having a copolymerization component content of less than 14 mol%, and
the first and the second polyester resin layers have a degree of residual orientation in a range of not less than 2% and not more than 50%, and have thicknesses after lamination of not less than 6 µm
wherein the degree of residual orientation is determined according to the following method:
(1) for an oriented polyester resin (or an oriented polyester film) before lamination and the resin (or film) after lamination, the X-ray diffraction intensity is measured in a range of 2θ = 20 to 30°;
(2) the straight line between X-ray diffraction intensities at 2θ = 20° and at 2θ = 30° is set as a base line;
(3) the height of the highest peak observed in the neighborhood of 2θ = 22 to 28° is measured with reference to the base line;
(4) the degree of residual orientation (%) is represented by P2/P1 × 100, where P1 is the height of the highest peak of the film before lamination, and P2 is the highest peak of the film after lamination.

2. A food can container produced with the laminated metal sheet according to claim 1.

## Patentansprüche

1. Laminiertes Metallblech, umfassend:
ein Metallblech;
eine erste Polyesterharzschicht, die auf einer Oberfläche des Metallblechs gebildet ist, um als Außenseite eines Gefäßes zu dienen, nachdem es in das Gefäß geformt wurde; und
eine zweite Polyesterharzschicht, die auf einer anderen Oberfläche des Metallblechs gebildet ist, um als Innenseite des Gefäßes zu dienen, nachdem es in das Gefäß geformt wurde, wobei
die erste Polyesterharzschicht nicht weniger als 30% in Masse und nicht mehr als 60% in Masse von kopolymerisiertem Polyethylen-Terephthalat mit einem Kopolymerisationskomponentengehalt von weniger als 6 Mol% und nicht weniger als 40% in Masse und nicht mehr als 70% in Masse von Polybutylen-Terephthalat beinhaltet,
die zweite Polyesterharzschicht ein kopolymerisiertes Polybutylen-Terephthalat mit einem Kopolymerisationskomponentengehalt von weniger als 14 Mol% ist, und
die erste und zweite Polyesterharzschicht einen Grad der Restorientierung in einem Bereich von nicht weniger als 2% und nicht mehr als 50% aufweisen und Dicken nach der Laminierung von nicht weniger als 6 µm aufweisen,
wobei der Grad der Restorientierung gemäß dem folgenden Verfahren bestimmt wird:
(1) für ein orientiertes Polyesterharz (oder eine orientierte Polyesterschicht) vor der Laminierung und das Harz (oder die Schicht) nach der Laminierung wird die Röntgenstrahlenbeugungsintensität in einem Bereich von 2θ = 20 bis 30° gemessen;
(2) die gerade Linie zwischen den Röntgenstrahlenbeugungsintensitäten bei 2θ = 20° und bei 2θ = 30° wird als Basislinie festgelegt;
(3) die Höhe des höchsten Spitzenwerts, der in der Nachbarschaft von 2θ = 22 bis 28° beobachtet wird, wird in Bezug auf die Basislinie gemessen;
(4) der Grad der Restorientierung (%) wird durch P2/P1 x 100 repräsentiert, wobei P1 die Höhe des höchsten Spitzenwerts der Schicht vor der Laminierung und P2 der höchste Spitzenwert der Schicht nach der Laminierung ist.

2. Lebensmitteldosengefäß, hergestellt mit dem laminierten Metallblech gemäß Anspruch 1.

## Revendications

1. Tôle stratifiée comprenant :
une tôle ;
une première couche de résine de polyester formée sur une surface de la tôle pour servir de surface extérieure d'un récipient une fois le récipient formé ; et
une seconde couche de résine de polyester formée sur une autre surface de la tôle pour servir de surface intérieure du récipient une fois le récipient formé, dans laquelle
la première couche de résine de polyester ne contient pas moins de 30 % en masse et pas plus de 60 % en masse de polyéthylène téréphtalate copolymérisé ayant une teneur en composant de copolymérisation de moins de 6 % en mole, et pas moins de 40 % en masse et pas plus de 70 % en masse de polytéréphtalate de butylène,
la seconde couche de résine de polyester est un polyéthylène téréphtalate copolymérisé ayant une teneur en composant de copolymérisation de moins de 14 % en mole, et
les première et seconde couches de résine de polyester ont un degré d'orientation résiduelle compris dans la plage de pas moins de 2 % et de pas plus de 50 %, et ont des épaisseurs après stratification de pas moins de 6 µm,
dans laquelle le degré d'orientation résiduelle est déterminé selon le procédé suivant :
(1) pour une résine de polyester orientée (ou un film de polyester orienté) avant stratification et la résine (ou le film) après stratification, l'intensité de diffraction des rayons X est mesurée dans une plage de 2θ = 20 à 30° ;
(2) la ligne droite entre les intensités de diffraction des rayons X à 2θ = 20° et à 2θ = 30° est définie comme une ligne de base ;
(3) la hauteur du pic le plus élevé observé au voisinage de 2θ = 22 à 28° est mesurée en référence à la ligne de base ;
(4) le degré d'orientation résiduelle (%) est représenté par P2/P1 x 100, où P1 est la hauteur du pic le plus élevé du film avant stratification, et P2 est le pic le plus élevé du film après stratification.

2. Boîte de conserve pour aliments produite avec la tôle stratifiée selon la revendication 1.
